# EUROPEAN PATENT SPECIFICATION

(11) **EP 1 145 491 B1**
(45) Date of publication and mention of the grant of the patent: **03.05.2006**
(21) Application number: 00969370.6
(22) Date of filing: 28.09.2000
(51) Int. Cl.: H04L 12/56

(54) **LOW POWER RADIO NETWORK**
FUNKNETZWERK MIT GERINGER LEISTUNG
RESEAU RADIO DE FAIBLE PUISSANCE

(30) Priority: 09.10.1999 GB 9923864
(43) Date of publication of application: 17.10.2001
(73) Proprietor: Koninklijke Philips Electronics N.V., 5621 BA Eindhoven (NL)
(72) Inventor: JAMIESON, Philip, A., NL-5656 AA Eindhoven (NL); MARSDEN, Ian, A., NL-5656 AA Eindhoven (NL)
(74) Representative: White, Andrew Gordon
(86) International application number: PCT/EP2000/009610
(87) International publication number: WO 2001/028157

(56) References cited:
- WO-A-99/14897
- US-A- 5 850 592
- HAARTSEN J: "BLUETOOTH - THE UNIVERSAL RADIO INTERFACE FOR AD HOC, WIRELESS CONNECTIVITY" ERICSSON REVIEW,ERICSSON. STOCKHOLM,SE, no. 3, 1998, pages 110-117, XP000783249 ISSN: 0014-0171

## Description

### Technical Field

The present invention relates to a method of creating a low power radio network, to a radio network created by this method and to a slave radio device for use on the radio network.

An application of the present invention is in the field of low power radio technologies for example home automation and personal local area networks.

### Background Art

Radio networks are known in the art and generally require devices to have built-in banks of settable dip switches. A radio address for a device is selected by adjusting the dip switches of the bank. Although the use of such devices has been known to provide operable networks they have some disadvantages. These disadvantages include the bank of user accessible dip switches increases the component count and hardware cost and limits the design packaging. A user needs to have knowledge of all the current devices on the network and their addresses so that the user can assign a new unused address to a new device. An error in setting the dip switches will only become apparent to the user when it is not working. Lastly, since anyone can set-up a device to work on a network, security is low.

Mobile communication systems, such as that disclosed in US 5,642,398, employ a registration scheme for a mobile station to register on a network, but such schemes require the mobile station to identify itself to the network. Therefore each mobile station must possess an identity prior to registration, and a scheme for managing the identities to avoid duplication is required.

PCT patent application WO 99/37106 discloses a radio network comprising a master unit and slave units in which slave units which have been registered with the network are allocated a response number when they are put into a PARK mode in which they are not actively transmitting or receiving data but remain synchronised with the master unit. When a PARKed slave wants to transmit data it requests access using its allocated response number and is then allocated a temporary MAC address for use during data transmission. However, WO 99/37106 does not address the process of registration of new slave stations which are not already members of the radio network.

### Disclosure of invention

An object of the present invention is to minimise user involvement in creating a low power radio network.

According to a first aspect of the present invention there is provided a method of accepting a slave radio device as a new network member on a low power radio network having a network responsible radio device transmitting periodic reference signals, characterised by the slave radio device detecting the periodic reference signals, in response thereto automatically transmitting an enumeration request for a network member identity, and the network responsible radio device, in response to that request, enumerating the slave radio device by issuing a network member identity to it.

The method in accordance with the present invention reduces user intervention when setting up a network thus allowing the network to be more dynamic in structure and also increasing the probability of a slave device working straight off the shelf.

According to a second aspect of the present invention there is provided a slave radio device for use on a low power radio network including a network responsible radio device, the slave radio device having means for detecting periodic reference signals transmitted by the network responsible radio device, characterised by means responsive to the detection of the periodic reference signals for transmitting an enumeration request for a network member identity, and means for receiving a network member identity issued by the network responsible radio device.

According to a third aspect of the present invention there is provided a low power radio network comprising the slave device according to the second aspect of the invention and a network responsible radio device having means for transmitting the periodic reference signal and means for issuing the network member identity to the slave radio device in response to receipt of the enumeration request from the slave radio device.

The setting-up of a radio network is dynamic in structure with both new slave devices coming on-line and other devices switching-off. The slave devices are simpler and cheaper as they do not require a bank of dip switches.

In order to maintain the integrity of the network, the network responsible radio device may have a default condition inhibiting acceptance of an enumeration request. This condition may be overcome by a user sending an enabling signal to the network responsible radio device.

### Brief Description of Drawings

The present invention will now be described, by way of example, with reference to the accompanying drawings, wherein:
Figure 1 is a block schematic diagram of a radio network, and
Figure 2 is a diagram of the enumerating process between a master device and a slave device.

### Mode for Carrying Out the Invention

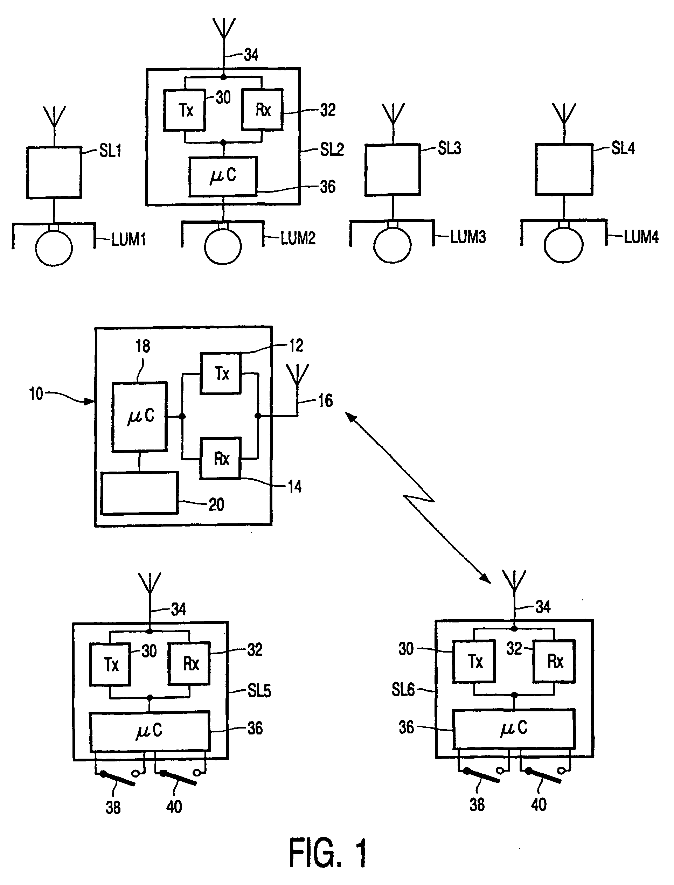

The low power radio network shown in Figure 1 will for the sake of convenience be described with reference to a lighting system. However it is to be understood that the principles of the present invention can be applied to any other suitable application requiring low cost, low power consuming devices operating over ranges of up to 50 metres, for example home automation, personal area networks.

Essentially the radio network comprises a star arrangement comprising a master radio device 10 functioning as a hub and low power radio slave devices SL1 to SL6 which are able to communicate with the master device 10 on a single channel in accordance with a carrier sense multiple access protocol. Such protocols are known and accordingly will not be described.

The master device 10, which may be powered from the mains supply, comprises a transmitter 12 and a receiver 14 coupled on the one hand to an antenna 16 and on the other hand to a microcontroller 18. A routing table 20 is coupled to the microcontroller 18 and in operation stores information about the radio network.

Each of the slave devices SL1 to SL6 is a low cost, battery powered device which comprises a transmitter 30 and a receiver 32 coupled on the one hand to an antenna 34 and on the other hand to a microcontroller 36. Those of the slave devices which function as remote controllers, say SL5 and SL6, have a simple, man/machine interface comprising say two switches 38, 40, voice activated devices or some other suitable signal input devices. The other of the slave devices, say SL1 to SL4, are coupled to apparatus to be controlled. In this example, the apparatus comprises luminaires LUM1 to LUM4.

The slave devices SL1 to SL6 have very small memories and have no knowledge about the radio network they become part of. Thus for example when a new slave device is to enter the radio network it has no prior knowledge of the network nor will it gain any knowledge about the network. Consequently it comprises a universal, off the shelf device which can join or leave any compatible radio network.

In order for a slave device to join a network it has to be enumerated by the master device. Enumeration is a process by which a slave device is given an identity by the master device 10.

In normal operation the master device 10 transmits periodic synchronisation or beacon signals. The synchronisation signals comprises some information about the network for example if it is accepting new slave devices. An unenumerated (or ophaned) slave device will automatically start searching for a network to join and listen for the periodic synchronisation signals.

If the network is currently accepting new devices the orphaned device will transmit an "enumeration request". This gives the master device 10 enough information to make a first pass assessment on the orphaned device's suitability for the network (this is made possible by a "device type summary" which is included in the "enumeration request"). If the device is provisionally accepted at this stage it is issued dynamically with an address by the master device 10. The master device 10 will then request further "device summary information" this information takes the form of a predefined "Device Information Structure". Through interoperation of this information the master device 10 can make a more refined decision on the suitability of the orphaned slave device for the network and if acceptable it will join the network. Altematively, if the orphaned slave device is considered unsuitable, the master device 10 will un-enumerate the orphaned slave device. As is evident the whole enumeration process has involved no user input at all. However to ensure network security and to allow the orphaned slave device to only join the correct network most networks by default will be set up not to allow new devices. Thus to enable a network for a new device to join, the user will need to actively enable the radio network for a new slave device. This can be achieved through a single button press on any of the remote control slave devices SL5, SL6 already on the network.

Optionally details of the enumerated device can include information about received signal strength at the master device 10, which information can provide an indication of range.

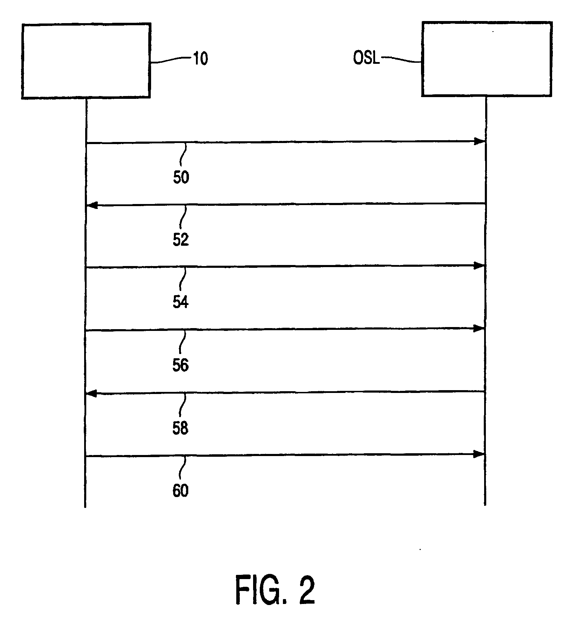

Figure 2 illustrates the exchange of signals between a master device 10 and an orphaned slave device OSL.

Signal 50 represents a periodic beacon (or synchronisation signal) transmitted by the master device 10. Signal 52 represents the device OSL requesting enumeration. Signal 54 represents the master device 10 acknowledging the request. Signal 56 represents the master device 10 requesting the device OSL to provide summary information. Signal 58 represents the device OSL supplying the information requested. Finally the signal 60 represents the device 10 acknowledging the signal 58 by either confirming the enumeration of the device OSL or un-enumerating it.

In the present specification and claims the word "a" or "an" preceding an element does not exclude the presence of a plurality of such elements. Further, the word "comprising" does not exclude the presence of other elements or steps than those listed.

From reading the present disclosure, other modifications will be apparent to persons skilled in the art. Such modifications may involve other features which are already known in the design, manufacture and use of low power radio networks and component parts therefor and which may be used instead of or in addition to features already described herein.

### Industrial Applicability

Low power radio networks such as home automation and personal local area networks.

## Claims

1. A method of accepting a slave radio device (SL1-6) as a new network member on a low power radio network having a network responsible radio device (10) transmitting periodic reference signals, **characterised by** the slave radio device (SL1-6) detecting the periodic reference signals, in response thereto automatically transmitting an enumeration request for a network member identity, and the network responsible radio device (10), in response to that request, enumerating the slave radio device (SL1-6) by issuing a network member identity to it.

2. A method as claimed in claim 1, **characterised in that** the low power radio network has a default condition inhibiting new slave radio devices (SL1-6) from becoming members of the radio network.

3. A method as claimed in claim 2, **characterised in that** the radio network is enabled to accept new slave devices (SL1-6) by an already enumerated slave device transmitting a signal to the network responsible radio device (10).

4. A slave radio device (SL1-6) for use on a low power radio network including a network responsible radio device (10), the slave radio device (SL1-6) having means (32, 36) for detecting periodic reference signals transmitted by the network responsible radio device (10), **characterised by** means (36, 30) responsive to the detection of the periodic reference signals for transmitting an enumeration request for a network member identity, and means (32) for receiving a network member identity issued by the network responsible radio device (10).

5. A low power radio network comprising the slave device (SL1-6) as claimed in claim 4 and a network responsible radio device (10) having means (12) for transmitting the periodic reference signal and means (18) for issuing the network member identity to the slave radio device (SL1-6) in response to receipt of the enumeration request from the slave radio device (SL1-6).

6. A radio network as claimed in claim 5, **characterised in that** the network responsible radio device (10) includes a routing table (20).

## Patentansprüche

1. Verfahren zum Akzeptieren einer Sklaven-Funkeinrichtung (SL1-6) als ein neues Netzwerkmitglied in einem Funknetzwerk geringer Leistung mit einer vom Netzwerk abhängigen Funkeinrichtung (10), die periodisch Bezugssignale überträgt, **dadurch gekennzeichnet, dass** die Sklaven-Funkeinrichtung (SL1-6) die periodischen Bezugssignale detektiert, in Reaktion hierauf automatisch einen Aufzählungsantrag für eine Netzwerkmitgliedsidentität überträgt, und die Funkeinrichtung (10) in Reaktion auf diesen Antrag die Sklaven-Funkeinrichtung (SL1-6) **dadurch** benennt, dass eine Netzwerkmitgliedsidentität abgegeben wird.

2. Verfahren nach Anspruch 1, **dadurch gekennzeichnet, dass** das Funknetzwerk mit geringer Leistung einen Vorgabezustand hat, der vermeidet, dass neue Sklaven-Funkeinrichtungen (SL1-6) Mitglied des Funknetzwerkes werden.

3. Verfahren nach Anspruch 2, **dadurch gekennzeichnet, dass** das Funknetzwerk freigegeben wird um neue Sklaven-Einrichtungen (SL1-6) zu akzeptieren, indem eine bereits benannte Sklaven-Einrichtung ein Signal zu der Funkeinrichtung (10) überträgt.

4. Sklaven-Funkeinrichtung (SL1-6) zur Verwendung in einem Funknetzwerk mit geringer Leistung mit einer Funkeinrichtung (10), wobei die Sklaven-Funkeinrichtung (SL1-6) Mittel (32, 36) aufweist zum detektieren periodischer Bezugssignale, die von der Funkeinrichtung (10) übertragen werden, **gekennzeichnet durch** Mittel (32, 36), die auf die Detektion der periodischen Bezugssignale zur Übertragung eines Benennungsantrags für eine Netzwerkmitgliedsidentität reagieren, und **durch** Mittel (32) zum Empfangen einer Netzwerkmitgliedsidentität, geliefert von der Funkeinrichtung (10).

5. Funknetzwerk mit geringer Leistung mit der Sklaven-Einrichtung (SL1-6) nach Anspruch 4 und mit einer Funkeinrichtung (10) mit Mitteln (12) zum Übertragen des periodischen Bezugssignals und mit Mitteln (18) zum Liefern der Netzwerkmitgliedsidentität zu der Sklaven-Funkeinrichtung (SL1-6) in Reaktion auf den Empfang des Benennungsantrags von der Sklaven-Einrichtung (SL1-6).

6. Funknetzwerk nach Anspruch 5, **dadurch gekennzeichnet, dass** die Funkeinrichtung (10) eine Routentabelle (20) aufweist.

## Revendications

1. Procédé d'acceptation d'un dispositif radio asservi (SL1 jusqu'à 6) en tant qu'un nouveau membre du réseau sur un réseau radio à faible puissance qui est pourvu d'un dispositif radio responsable du réseau (10) transmettant des signaux de référence périodiques, **caractérisé par** le dispositif radio asservi (SL1 jusqu'à 6) détectant les signaux de référence périodiques, transmettant automatiquement, en réaction à cela, une demande d'énumération pour une identité de membre du réseau, et le dispositif radio responsable du réseau (10), en réaction à cette demande, énumérant le dispositif radio asservi (SL1 jusqu'à 6) en lui procurant une identité de membre du réseau.

2. Procédé selon la revendication 1, **caractérisé en ce que** le réseau radio à faible puissance présente une condition par défaut qui inhibe que de nouveaux dispositifs radio asservis (SL1 jusqu'à 6) deviennent des membres du réseau radio.

3. Procédé selon la revendication 2, **caractérisé en ce que** le réseau radio est validé de manière à accepter de nouveaux dispositifs asservis (SL1 jusqu'à 6) par un dispositif asservi déjà énuméré qui transmet un signal au dispositif radio responsable du réseau (10).

4. Dispositif radio asservi (SL1 jusqu'à 6) pour être utilisé sur un réseau radio à faible puissance incorporant un dispositif radio responsable du réseau (10), le dispositif radio asservi (SL1 jusqu'à 6) étant pourvu de moyens (32, 36) pour détecter des signaux de référence périodiques qui sont transmis par le dispositif radio responsable du réseau (10), **caractérisé par** des moyens (36, 30) réagissant à la détection des signaux de référence périodiques pour transmettre une demande d'énumération pour une identité de membre du réseau et par des moyens (32) pour recevoir une identité de membre du réseau qui est procurée par le dispositif radio responsable du réseau (10).

5. Réseau radio à faible puissance comprenant le dispositif asservi (SL1 jusqu'à 6) selon la revendication 4 et un dispositif radio responsable du réseau (10) étant pourvu de moyens (12) pour transmettre le signal de référence périodique et de moyens (18) pour procurer l'identité de membre du réseau au dispositif radio asservi (SL1 jusqu'à 6) en réaction à la réception de la demande d'énumération en provenance du dispositif radio asservi (SL1 jusqu'à 6).

6. Réseau radio selon la revendication 5, **caractérisé en ce que** le dispositif radio responsable du réseau (10) comprend un tableau d'acheminement (20).
